# EUROPEAN PATENT APPLICATION

(11) **EP 4 203 179 A1**
(43) Date of publication of application: **28.06.2023**
(21) Application number: 21216978.3
(22) Date of filing: 22.12.2021
(51) Int. Cl.: H01Q 1/22, H01Q 5/378, H01Q 21/28, H01Q 9/30

(54) **PORTABLE COMPUTING DEVICE AND LAPTOP COMPUTER**

(71) Applicant: INTEL Corporation, Santa Clara, CA 95054 (US)
(72) Inventor: TAMRAKAR, Maruti, 600127 Chennai, Tamil Nadu (IN); GUPTA, Jay Vishnu, Bengaluru (IN); THAKUR, Jayprakash, 560035 Bangalore (IN); GUPTA, Sagar, Ghaziabad (IN); MASTI, Sandeep, 560034 Bengaluru (IN)
(74) Representative: 2SPL Patentanwälte PartG mbB

(57) **Abstract**

A portable computing device (100) comprises a first body portion (110), a second body portion (120) and a hinge (130a, 130b) connecting the first body portion (110) and the second body portion (120). An antenna (210) for a radio frequency transceiver is placed in a vicinity of the hinge (130a, 130b).

## Description

### Field

Examples relate to portable computing devices and laptop computers.

### Background

Premium look thin and light, narrow Bezel laptop systems or other portable computing devices often require a chassis entirely made from metal, not only for optical reasons but also for reasons of stability. However, portable computing devices often also have wireless communication capabilities, such as for example Wireless Lan (WLAN), Cellular or Bluetooth modules, using Radio Frequency (RF) to communicate. In case of metal chassis, the implementation of RF transmitters may be challenging since RF - windows are required in the chassis. Using a cutout in the chassis covered by plastics may be undesirable since the cutout does not only deteriorate the optic impression but also reduces mechanical stability of the chassis.

Hence, there is a demand for portable computing devices having RF transmitters implemented without reducing the stability of the chassis and deteriorating the optics of the portable computing device.

### Brief description of the Figures

Some examples of apparatuses and/or methods will be described in the following by way of example only, and with reference to the accompanying figures, in which
Fig. 1 illustrates an example of a portable computing device;
Fig. 2 illustrates a position of an antenna close to the hinge of an example of a portable computing device;
Fig. 3 illustrates a magnified view of a hinge of an example of a portable computing device;
Fig. 4 illustrates a schematic view of a body portion of a laptop computer;
Fig. 5 the parameter S11 of an antenna of an example of a portable computing device; and
Fig. 6 directivity patterns of an antenna of an example of a portable computing device.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

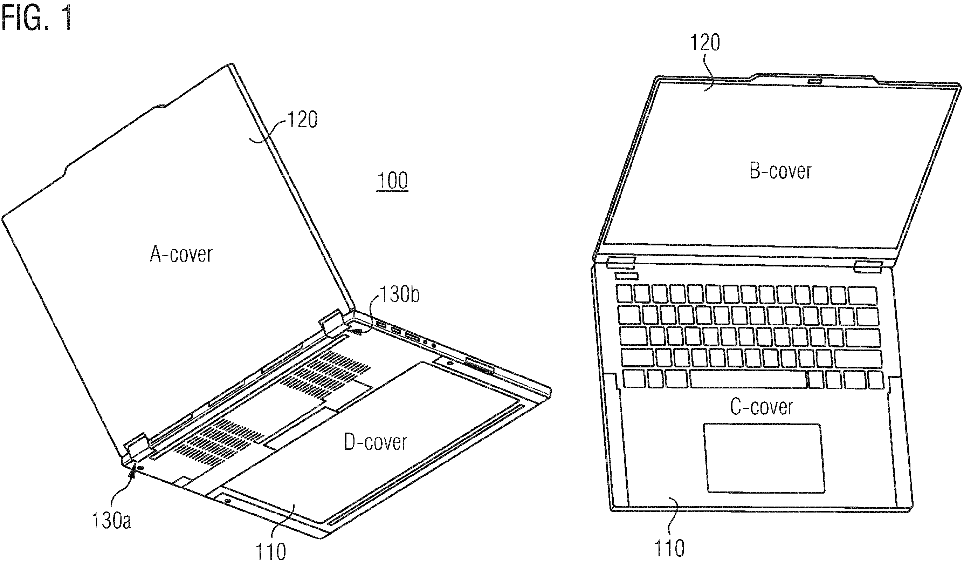

Fig. 1 illustrates an example of a portable computing device 100 in 2 different isometric views. As an example for a portable computing device 100, fig. 1 illustrates a laptop computer. The surfaces of a laptop computer follow the naming scheme illustrated in fig. 1. A first body portion 110 comprising the battery and the keyboard of the laptop computer 100 is connected to a second body portion 120 comprising the display by hinges 130a and 130b. The surface of the first body portion 110 having the keyboard is named C Cover. The opposite surface of the first body portion 110 is named D Cover. The surface of the second body portion 120 having the display is named B Cover and the opposite surface of the second body portion 120 is named A cover.

An antenna for a radio frequency transceiver of the portable computing device 100 is placed in the vicinity of at least one of the hinges 130a or 130b. At the hinges, the body portions may naturally have an opening for constructive reasons, or an opening may be made in one of the chassis of the first body portion 110 or the second body portion 120 without reducing the stability of the chassis or without deteriorating the optics of the device.

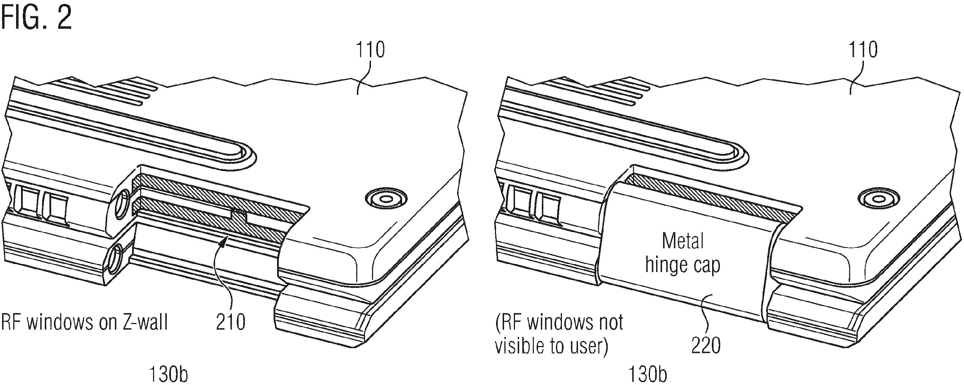

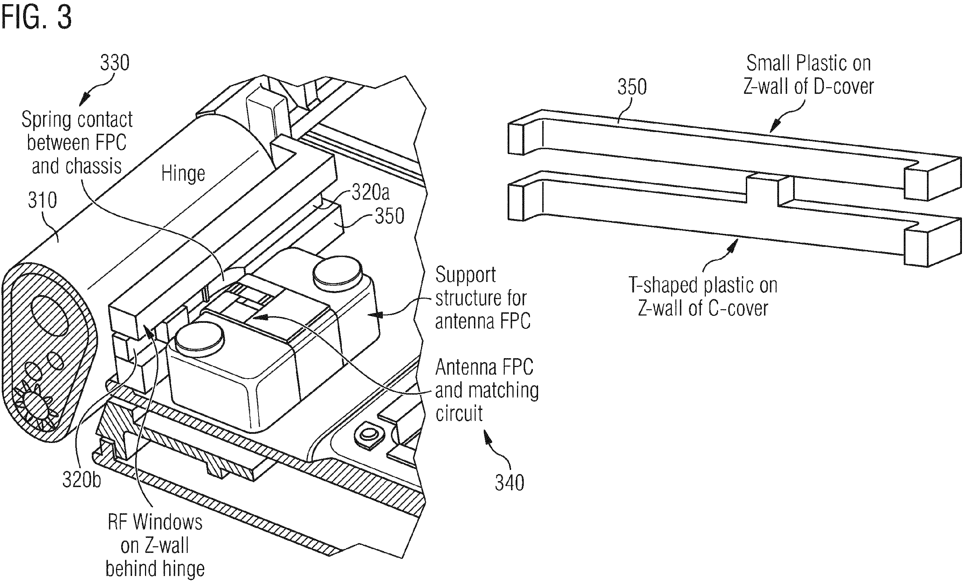

Fig. 2 illustrates a magnified view of the area in the vicinity of the hinge 130b. In the example of fig. 2, a strip antenna 210 supporting at least two frequency bands is used. Details of the strip antenna 210 are illustrated in Fig. 3. The antenna radiates through a radio frequency window within the first body portion 110, the radio frequency window being opposite the hinge. The left illustration of fig. 2 shows the hinge area of the portable computing device 100 without the hinge to illustrate the position of the strip antenna 210. The right illustration shows the hinge, which is surrounded by a metallic hinge cap 220 to hide and protect the mechanics of the hinge. In the implementation illustrated in Fig 2, the strip antenna 210 in positioned at a lateral end plane of the first body portion 110, that is on the rear side of the first body portion 110 that is also called Z-Plane. Further examples may likewise place the strip antenna 210 at the lateral end plane of the second body portion 120. Similarly, further examples may also use other radiating elements than the strip like elements illustrated in fig. 2. In other words, arbitrary antenna geometries may be used instead.

In the example illustrated in fig. 2, the strip antenna 210 may be configured to utilize metallic parts of the hinge as parasitic radiating elements. For example, the metallic hinge cap 220 may be designed to be excited by the strip antenna 210 to serve as an active part of a transmit and receive antenna arrangement.

In other words, the chassis antenna illustrated in fig.2 is using the hinge cap as a radiator. The hinge part of the chassis is directly fed by the matching network. The antenna is implemented behind the hinge cap on Z-wall of the C/D cover. Fig. 2 shows the H-slot on the Z-wall behind hinge. Behind the slots, the antenna and matching circuit is placed. As can be seen from the figure, the antenna RF windows are completely invisible as it is behind the hinge cap. There is no slot/ plastic present in A/B/C/D cover of the system. As compared to other solutions, the H-slot antenna is that it doesn't require any visible large plastic opening in C/D cover. Also, it is an integral part of the metal chassis and does not require addition space for antenna placement. It does not eat up easily accessible prime area for other components (e.g., battery, I/O ports, etc.).

The proposed antenna can be placed behind the hinge such that metal hinge will not block the radiation. However, the metal hinge may even be used as a part of the antenna element as a parasitic element.

According to some examples, a hinge cap may also be made of plastics to not be excited by a radiator of an antenna. In this event, the radiator and eventually connected matching circuitry may likewise be tuned to fulfil the normative requirements of the communication standard it is used for.

Fig. 3 illustrates a magnified view of the hinge 310 of an example of a portable computing device 100 of fig. 1. The antenna comprises a first radiating element 320a (a longer strip) and a second radiating element (320b) to support at least two frequency bands, such as for example the 2.4GHz and the 5GHz frequency ranges of WLAN.

The first radiating element 320a is directly connected to a front end 340 of a transmitter circuit by means of a spring 330 and the second radiating element 320b is excited by the first radiating element 320a.

In alternative examples, the second radiating element 320b or both radiating elements may be directly connected to the front end 340.

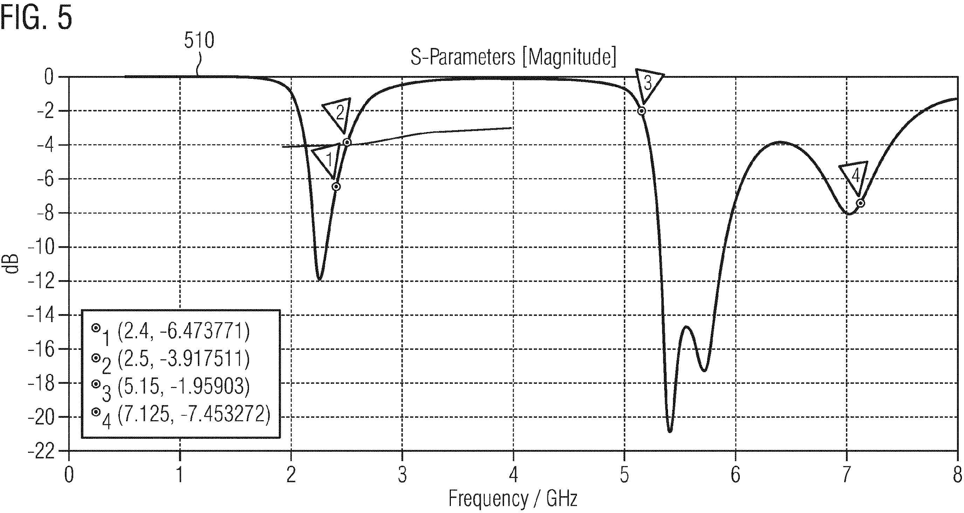

To mechanically fix the radiating elements within the first body portion, an h-shaped element 350 of plastics may be used, illustrated in fig. 5 to the right.

In other words, the design of a H-shaped Wi-Fi antenna behind hinge 310 is presented in Fig. 3. As can be seen from fig. 3, the antenna may be fed by direct feeding technique (using spring contact between antenna FPC and chassis) which may give very good efficiency performance.

Here, a support structure 350 is used to place antenna FPC. However, it is possible to collocate antenna FPC with any other element which does not contain metal. A matching circuit may be used to match the impedance.

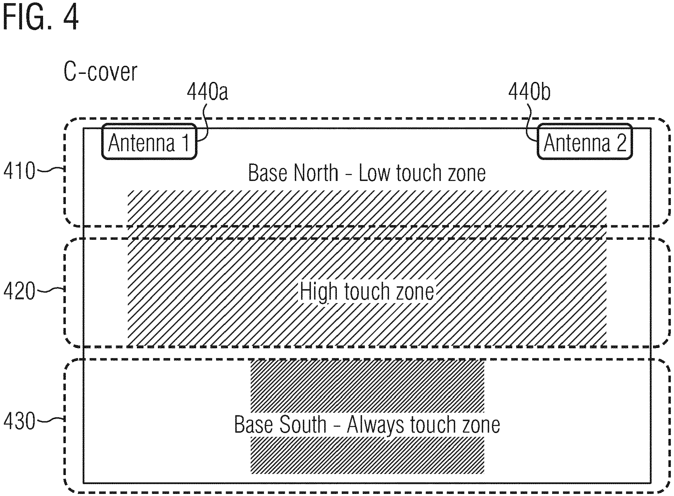

Fig. 4 illustrates a schematic view of a body portion 110 of a laptop computer. As illustrated in fig. 4, the examples described herein may further result in a portable computing device with good Specific Absorption Rate (SAR) characteristics, since the antennas 440a and 440b are arranged at an area only rarely if at all in direct contact to human tissue. While the always touch zone 430 is a zone, the body portion 110 is always touched using the touchpad or serving as a rest for the user's palms, the high touch zone 420 is often touched also, e.g. in the event the keyboard is used for writing. However, according to the examples, the antennas 440a and 440b are placed in the low touch zone 410, minimizing the risk of radiation damage to human tissue.

In other words, the antenna 440a and 440b is placed in base north area near hinge, which is a low touch zone, human SAR issues will be little. In addition, the SAR measurement for both clamshell and tablet mode, will give excellent performance as C and D covers are completely metal.

Fig. 5 the parameter S11 of an antenna of an example of a portable computing device 110 as illustrated above. As illustrated by graph 510, the antenna requirements to operate in the 2.4GHz, 5GHz, and 7GHz range of 802.11 WLAN implementations is fulfilled.

In other words, fig. 5 shows the parameter S11 of an antenna using the hinge cap as parasitic radiating element and other radiating parts of an antenna are of the chassis. Using a spring contact, the matching circuit is connected to the part of the chassis. The illustrated antenna is tuned for WLAN-6 frequency bands (2.4 GHz, 5 GHz, and 7 GHz). The 2.4 GHz frequency band is 2400-2500 MHz, 5 GHz frequency band is 5180- 5825 MHz and 7 GHz frequency band is 5925-7125 MHz. The S-parameter result is given in Fig. 5. The return loss (S11, dB) of antenna is below -4 dB for both the frequency bands, which indicates good impedance matching with 50 ohms. The achieved return loss or impedance bandwidth is meeting the requirements of WLAN-6 antenna design.

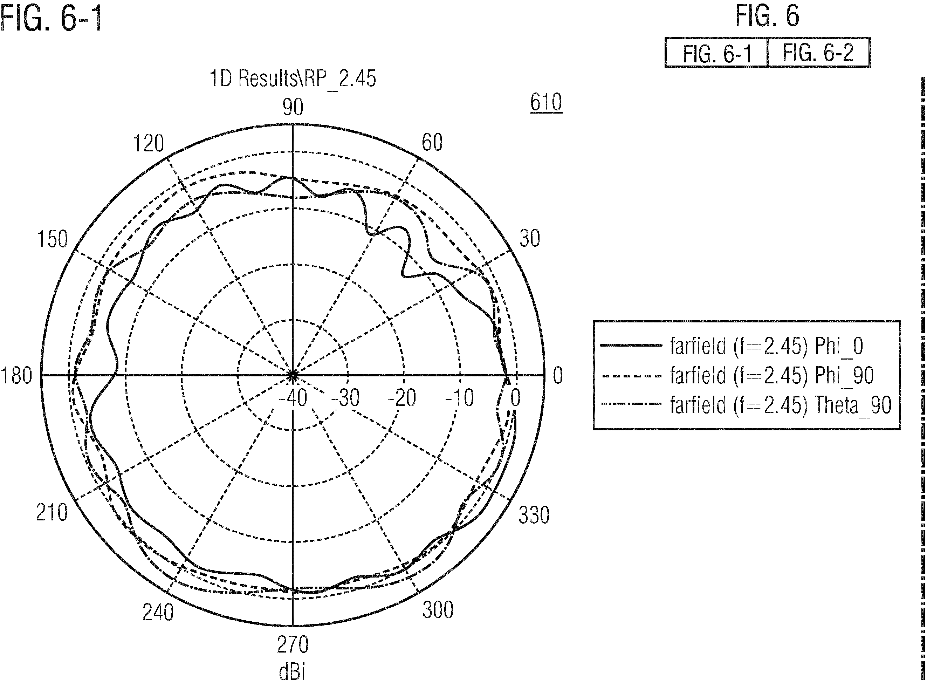

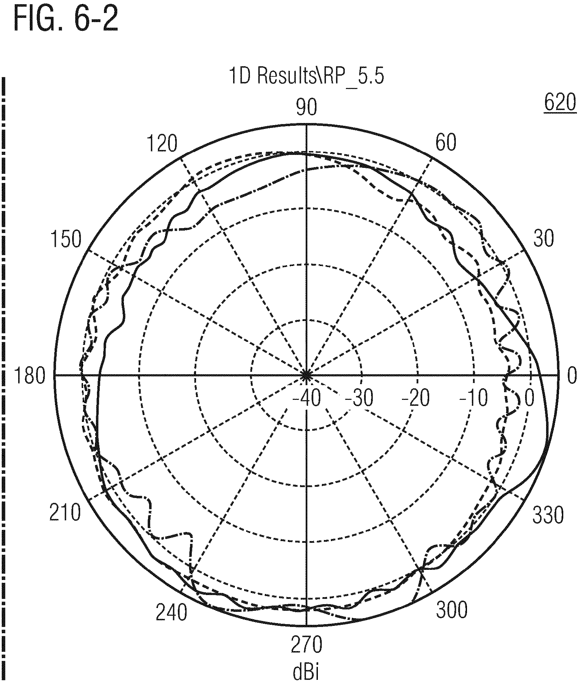

Fig. 6 illustrates that the directivity patterns of the antenna also fulfill the requirement of omnidirectionality for both frequency bands. The illustration 610 shows the directivity patterns in the 2,4 GHz band while illustration 620 shows the directivity patterns in the 5 GHz band. In other words, the radiation pattern is given in Fig. 6 for two frequencies 2.45 GHz and 5.5 GHz. The radiation pattern is observed on three different angles Phi=0 Deg, Phi=90 Deg and Theta=90 Deg. The Phi=0 Deg and phi=90 Deg the vertical cut of system and theta 90 deg gives horizontal cut of system. The radiation pattern shows that the antenna has an omni-directional pattern and does not have sharp null on any direction. The antenna peak gain is 2.5 dB and 5 dB for 2.45 GHz and 5.5 GHz, respectively.

In summary, the examples discussed herein may achieve that a radiating slot in a metal chassis and hidden behind the hinge that makes chassis completely metal look and have a clean ID. The hinge cap may become part of the antenna without any modifications in hinge mechanism and it is aid to the antenna radiation to achieve 360° radiation performance. The proposed antenna may be excited through direct feed technique to achieve the best wireless performance. The antenna design may be a part of chassis (base and hinge) which does not require any visible plastics with best connectivity and performance in all the modes (open-lid/ closed-lid/ tablet) enable its use for complete premium ID look.

The examples may help to make full metal chassis system without any visible plastic, gives complete premium ID look. Also, no painting is required as not having any visible plastic in the chassis. The proposed antenna can be designed with 360° rotation hinge without wireless performance in any mode (convertible systems). If the antenna location is behind the hinge, human SAR issues can be low. In addition, good SAR performance for both (clamshell and tablet mode) may be achieved if C and D covers are completely metal.

While the example implementing the concept described herein has been illustrated to be a laptop computer, further examples may likewise make use of the concept in arbitrary other portable computing devices, such as for example in a convertible computer, a tablet or a mobile phone.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A portable computing device (100) comprising:
a first body portion (110);
a second body portion (120);
a hinge (130a, 130b) connecting the first body portion (110) and the second body portion (120); and
an antenna (210) for a radio frequency transceiver, the antenna being placed in a vicinity of the hinge (130a, 130b).

2. The portable computing device (100) of claim 1, wherein the antenna is configured to radiate through a radio frequency window within the first body portion (110) or within the second body portion (120), the radio frequency window being opposite the hinge (130a, 130b).

3. The portable computing device (100) of claim 1 or 2, wherein the antenna (210) is a strip antenna.

4. The portable computing device (100) of claim 3, wherein the antenna (210) comprises a first radiating element and a second radiating element.

5. The portable computing device (100) of claim 4, wherein one of the first radiating element and the second radiating element is directly connected to a front end (340) of a transmitter circuit.

6. The portable computing device (100) of claim 5, wherein the one of the first radiating element and the second radiating element is directly connected to the front end (340) by a spring (330).

7. The portable computing device of any one of claims 4 to 6, wherein radiating elements are mechanically fixed to at least one of the first body portion (110) and the second body portion (120) via an element (350) made of plastics.

8. The portable computing device (100) of any one of the preceding claims, wherein the antenna is configured to utilize metallic parts of the hinge (130a, 130b) as parasitic radiating element.

9. The portable computing device (100) of any one of the preceding claims, wherein the portable computing device is one of a laptop computer, a convertible computer, a tablet or a mobile phone.

10. The portable computing device of any one of the preceding claims, wherein the antenna is placed in a lateral end plane of the first body portion (110) and the second body portion (120).

11. A mobile computer (100) comprising;
a first body portion (110) for a keyboard;
a second body portion (120) for a display;
a hinge (130a, 130b) connecting the first body portion (110) and the second body portion (120); and
an antenna for a radio frequency transceiver, the antenna being placed in a vicinity of the hinge (130a, 130b).

12. The mobile computer (100) of claim 11, wherein the antenna is placed opposite the hinge (130a, 130b) in one of the first body portion (110) or the second body portion (120).

13. The mobile computer (100) of claim 11 or 12, wherein the hinge (130a, 130b) has a cap (220) made of a metallic material.

14. A portable computing device (100) comprising:
a first body portion (110);
a second body portion (120);
a hinge (130a, 130b) connecting the first body portion (110) and the second body portion (120); and
means for emitting an electromagnetic wave form an inner volume of the first body portion (110) or the second body portion (120) into an environment, said means being placed in a vicinity of the hinge.

15. The portable computing device (100) of claim 14, wherein the means for emitting an electromagnetic wave are being opposite the hinge (130a, 130b).
